# EUROPEAN PATENT APPLICATION

(11) **EP 4 806 740 A1**
(43) Date of publication of application: **16.09.2026**
(21) Application number: 25163419.2
(22) Date of filing: 13.03.2025
(51) Int. Cl.: B60T 13/26, B60T 17/08, F16D 55/226, F16D 65/00, F16D 65/18, F16D 121/08

(54) **DISC BRAKE ACTUATOR, AND METHODS OF INSTALLING AND REMOVING A DISC BRAKE ACTUATOR**

(71) Applicant: Volvo Truck Corporation, 405 08 Göteborg (SE)
(72) Inventor: ILYAS, Mohamad, 413 10 GÖTEBORG (SE); PETERSSON, Martin, 433 68 SÄVEDALEN (SE); RUFAT, Arturo, 416 74 GÖTEBORG (SE); SRIVASTAVA, Suraj, 417 47 GÖTEBORG (SE); VELMURUGAN, Arunkumar, 560093 BANGALORE (IN); UMBARE, Deepak, 411037 PUNE (IN)
(74) Representative: Kransell & Wennborg KB

(57) **Abstract**

A disc brake actuator (17) for a heavy-duty vehicle (1), the disc brake actuator (17) comprising: a mounting surface (19) arranged to abut with a corresponding surface of a brake caliper (13) of the vehicle (1); an internally threaded bore (21) extending into the disc brake actuator (17) from the mounting surface (19) along a first direction (25); and an externally threaded bolt (23) spaced apart from the internally threaded bore (21) and projecting from the mounting surface (19) along a second direction (27), parallel to the first direction (25).

## Description

### \TECHNICAL FIELD

The disclosure relates generally to brake system assemblies. In particular aspects, the disclosure relates to a disc brake actuator for a heavy vehicle, and to methods of installing and removing a disc brake actuator. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Disc brake actuators for heavy-duty vehicles are typically mounted using two externally threaded bolts that extend through corresponding holes in a brake caliper and are secured with nuts. In installations where space behind the actuator is limited by structural components of the vehicle, removing or installing the actuator requires sufficient axial clearance, which may be unavailable, complicating maintenance and serviceability. This constraint often necessitates partial disassembly of surrounding components, increasing labor time and vehicle downtime.

It would be desirable to provide for simplified installation and/or removal of the disc brake actuator.

### SUMMARY

According to a first aspect of the disclosure, there is provided a disc brake actuator for a heavy-duty vehicle, the disc brake actuator comprising: a mounting surface arranged to abut with a corresponding surface of a brake caliper of the vehicle; an internally threaded bore extending into the disc brake actuator from the mounting surface along a first direction; and an externally threaded bolt spaced apart from the internally threaded bore and projecting from the mounting surface along a second direction, parallel to the first direction. The first aspect of the disclosure may seek to provide an improved solution for facilitating installation and removal of the disc brake actuator in confined spaces. The inventors have realized that while a similar benefit could be achieved using two internally threaded bores, the solution according to the first aspect simplifies assembly and removal by allowing the disc brake actuator to be supported by a hinge formed between the externally threaded bolt and a corresponding hole in the brake caliper. This configuration enables the operator to first engage the externally threaded bolt, then pivot the disc brake actuator into position before securing it with a fastening bolt, improving handling and reducing the risk of misalignment. A further technical benefit may include reducing the required manual effort and time for servicing the actuator, particularly in vehicle installations where access to the actuator is restricted.

Optionally in some examples, including in at least one preferred example, the disc brake actuator may comprise a housing, and the mounting surface may be formed by a portion of the housing. A technical benefit may include that the mounting surface provides a structurally stable interface for securing the disc brake actuator to the brake caliper.

Optionally in some examples, including in at least one preferred example, the externally threaded bolt may be fixed to the housing of the disc brake actuator. A technical benefit may include that the externally threaded bolt provides a secure attachment point for mounting the disc brake actuator to the brake caliper.

Optionally in some examples, including in at least one preferred example, the externally threaded bolt may be integrally formed with the housing of the disc brake actuator. A technical benefit may include that integrating the externally threaded bolt with the housing reduces the number of separate components, which may simplify manufacturing and improve structural robustness.

Optionally in some examples, including in at least one preferred example, a length of the externally threaded bolt from the mounting surface of the disc brake actuator may be greater than a depth of the internally threaded bore from the mounting surface. A technical benefit may include that the externally threaded bolt may be long enough to pass through a corresponding hole in the brake caliper, while the internally threaded bore may be long enough to allow sufficient interaction with a fastening bolt, without being unnecessarily long. This may be beneficial for achieving a compact disc brake actuator, in particular a short disc brake actuator.

Optionally in some examples, including in at least one preferred example, the length of the externally threaded bolt may be at least 20% greater than the depth of the internally threaded bore. A technical benefit may include that the externally threaded bolt extends sufficiently to pass through a corresponding hole in the brake caliper and engage with a securing nut, while the internally threaded bore remains long enough to provide reliable engagement with a fastening bolt, contributing to a compact design of the disc brake actuator.

Optionally in some examples, including in at least one preferred example, the length of the externally threaded bolt may be at least 30% greater than the depth of the internally threaded bore. A technical benefit may include that the externally threaded bolt extends further to facilitate secure attachment to the brake caliper, while the internally threaded bore remains sufficiently deep to provide reliable engagement with a fastening bolt, supporting a compact design of the disc brake actuator.

Optionally in some examples, including in at least one preferred example, the disc brake actuator may comprise an actuator rod for actuating the brake caliper of the vehicle, and the internally threaded bore and the externally threaded bolt may be substantially equidistant from the actuator rod. A technical benefit may include that the mounting points are positioned to balance forces acting on the disc brake actuator during operation, which may contribute to stable attachment and even load distribution.

Optionally in some examples, including in at least one preferred example, the internally threaded bore and the externally threaded bolt may be symmetrically positioned in relation to the actuator rod. A technical benefit may include that the symmetrical positioning provides a balanced load distribution on the disc brake actuator, which may contribute to uniform stress handling and stable mounting.

Optionally in some examples, including in at least one preferred example, the disc brake actuator of the disclosure may be comprised in a kit of parts, further comprising a fastening bolt configured to be received by and engage with the internally threaded bore of the disc brake actuator, and a nut configured to engage with the externally threaded bolt of the disc brake actuator. A technical benefit may include that the kit of parts provides all necessary components for securely mounting the disc brake actuator to a brake caliper, facilitating installation and maintenance.

Optionally in some examples, including in at least one preferred example, the disc brake actuator of the disclosure may be comprised in a brake assembly, further comprising a brake caliper, wherein the disc brake actuator is attached to the brake caliper in such a way that the mounting surface of the disc brake actuator interfaces with a corresponding mounting surface of the brake caliper. A technical benefit may include that the externally threaded bolt of the disc brake actuator may be inserted through a corresponding hole in the brake caliper before the disc brake actuator is pivoted into position, allowing the operator to support the actuator on the externally threaded bolt during installation. This may facilitate handling of the actuator and alignment of the internally threaded bore with a corresponding hole in the brake caliper before inserting the fastening bolt. This configuration may be particularly beneficial in vehicle installations where access to the actuator is restricted, as it reduces the need for precise manual positioning and allows the actuator to be installed in a controlled manner despite limited working space.

Optionally in some examples, including in at least one preferred example, the externally threaded bolt of the disc brake actuator may extend through a corresponding hole in the brake caliper and be secured by a nut, and a fastening bolt may be received in the internally threaded bore to fasten the disc brake actuator to the brake caliper. A technical benefit may include that the externally threaded bolt and the fastening bolt provide a secure and stable attachment of the disc brake actuator to the brake caliper.

Optionally in some examples, including in at least one preferred example, the externally threaded bolt of the disc brake actuator may define a pivot axis about which the disc brake actuator can be pivoted when the nut has been released and the fastening bolt received in the internally threaded bore has been removed. A technical benefit may include that the pivoting capability allows the disc brake actuator to be moved out of position without requiring axial displacement, which may facilitate removal and reinstallation in confined spaces.

Optionally in some examples, including in at least one preferred example, the brake assembly of the disclosure may be comprised in a vehicle. A technical benefit may include that the brake assembly is applicable to various vehicle types, including heavy-duty vehicles, where serviceability and compact installation are important considerations.

Optionally in some examples, including in at least one preferred example, the vehicle may comprise a plurality of wheels, and one brake assembly of the disclosure for each wheel of the plurality of wheels. A technical benefit may include that each wheel is provided with a brake assembly designed for secure attachment and facilitated maintenance, which may contribute to reliable braking performance across the vehicle.

Optionally in some examples, including in at least one preferred example, the disc brake actuator may be arranged between the brake caliper and a structural component of the vehicle, and a distance between the mounting surface of the brake caliper and the structural component of the vehicle may be less than a length of the externally threaded bolt of the disc brake actuator. A technical benefit may include that the disc brake actuator may be mountable in vehicle installations where space behind the actuator is restricted, without requiring additional clearance for axial displacement during installation or removal. This may eliminate the need to remove the structural component before removing the disc brake actuator, which may reduce maintenance time and cost while also reducing the risk of error during reassembly.

Optionally in some examples, including in at least one preferred example, the distance between the mounting surface of the brake caliper and the structural component of the vehicle may be a distance in the first direction. A technical benefit may include that the spatial constraint considered for the installation and removal of the disc brake actuator is aligned with the orientation of the internally threaded bore and the externally threaded bolt, allowing for a compact and space-efficient mounting configuration.

According to a second aspect of the disclosure, there is provided a method of removing from a vehicle a disc brake actuator having a mounting surface arranged in abutment with a corresponding surface of a brake caliper of the vehicle, the disc brake actuator including an internally threaded bore extending into the disc brake actuator from the mounting surface along a first direction, and an externally threaded bolt spaced apart from the internally threaded bore and projecting from the mounting surface along a second direction, parallel to the first direction, the method comprising: releasing and removing a fastening bolt engaging with the internally threaded bore of the brake actuator; releasing a nut fastening the externally threaded bolt of the disc brake actuator to the brake caliper of the vehicle; pivoting the disc brake actuator about the externally threaded bolt; and moving the disc brake actuator away from the brake caliper until the externally threaded bolt goes free from the corresponding hole of the brake caliper. The second aspect of the disclosure may seek to provide an improved solution for facilitating removal of the disc brake actuator in confined spaces. A technical benefit may include that the externally threaded bolt may serve as a pivot point during removal, allowing the disc brake actuator to be rotated before being fully detached from the brake caliper, which may reduce handling effort and improve accessibility in installations where axial displacement is restricted.

According to a third aspect of the disclosure, there is provided a method of installing a disc brake actuator in a vehicle, the method comprising: providing a disc brake actuator having a mounting surface arranged to abut with a corresponding surface of a brake caliper of the vehicle, the disc brake actuator including an internally threaded bore extending into the disc brake actuator from the mounting surface along a first direction, and an externally threaded bolt spaced apart from the internally threaded bore and projecting from the mounting surface along a second direction, parallel to the first direction; inserting the externally threaded bolt through a corresponding first hole in the brake caliper of the vehicle; pivoting the disc brake actuator about the externally threaded bolt until the internally threaded bore is aligned with a corresponding second hole in the brake caliper; inserting a fastening bolt through the corresponding second hole and into the internally threaded bore; rotating the fastening bolt to engage the internally threaded bore; and securing a nut onto the externally threaded bolt of the disc brake actuator. The third aspect of the disclosure may seek to provide an improved solution for facilitating installation of the disc brake actuator in confined spaces. A technical benefit may include that the externally threaded bolt may serve as a support point during installation, allowing the disc brake actuator to be pivoted into position before securing it with the fastening bolt and nut, which may reduce handling effort and improve alignment.

Optionally in some examples, including in at least one preferred example, the vehicle may comprise a structural component partly blocking removal of the disc brake actuator without first pivoting the disc brake actuator about the externally threaded bolt of the disc brake actuator, and the disc brake actuator may be pivoted about the externally threaded bolt until the disc brake actuator can be removed without interference from the structural component of the vehicle. A technical benefit may include that the disc brake actuator can be removed without requiring prior disassembly of the structural component, which may reduce maintenance time and cost while also reducing the risk of error during reassembly.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG.** 1 is an exemplary vehicle according to an example.
**FIG.** 2 is an exemplary brake assembly according to an example.
**FIG.** 3 is an exemplary disc brake actuator according to an example.
**FIG.** 4 is an exemplary method according to an example.
**FIGS. 5A-5C** schematically illustrate different stages in an exemplary procedure for removing an exemplary disc brake actuator according to an example.
**FIG.** 6 is an exemplary method according to an example.

### DETAILED DESCRIPTION

The detailed description set forth below provides information and examples of the disclosed technology with sufficient detail to enable those skilled in the art to practice the disclosure. Examples of the present disclosure provide an improved solution for facilitating installation and removal of a disc brake actuator in confined spaces.

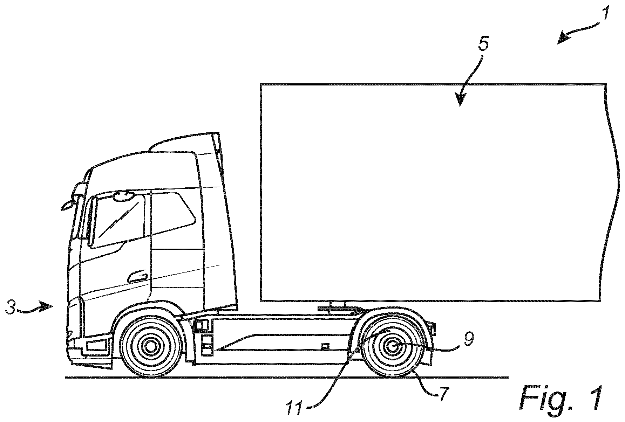

FIG. 1 is an exemplary vehicle 1 according to an example. In this particular example, the vehicle 1 is shown as a vehicle combination including a tractor 3 and a semitrailer 5. Referring to Fig. 1, the vehicle 1 further comprises at least one wheel 7, arranged to rotate around a rotational axis 9, and a brake assembly 11 (not visible in Fig. 1) for braking the wheel 7.

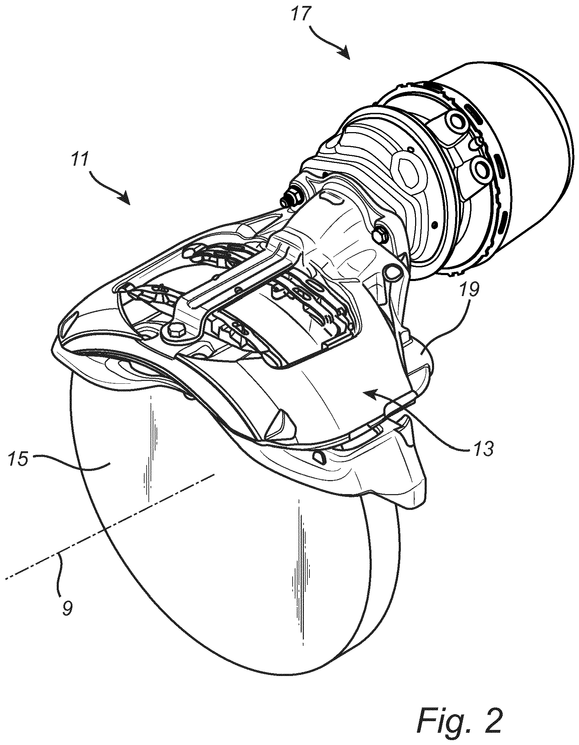

FIG. 2 illustrates an exemplary brake assembly 11 according to an example, comprising a brake caliper 13, a disc brake actuator 17, and a brake disc 15. The disc brake actuator 17 is attached to the brake caliper 13.

In the brake assembly 11, actuation is achieved by supplying pressurized air to the disc brake actuator 17. When the driver depresses the brake pedal or when an automatic driving system issues a braking command, compressed air is delivered from the vehicle's air reservoir to the actuator 17, generating a force that moves an internal pushrod. This movement causes the brake pads within the brake caliper 13 to press against the brake disc 15, creating the necessary friction to decelerate or stop the vehicle. This air-actuated braking mechanism is commonly employed in heavy-duty vehicles, such as trucks and buses, due to its reliability and effectiveness.

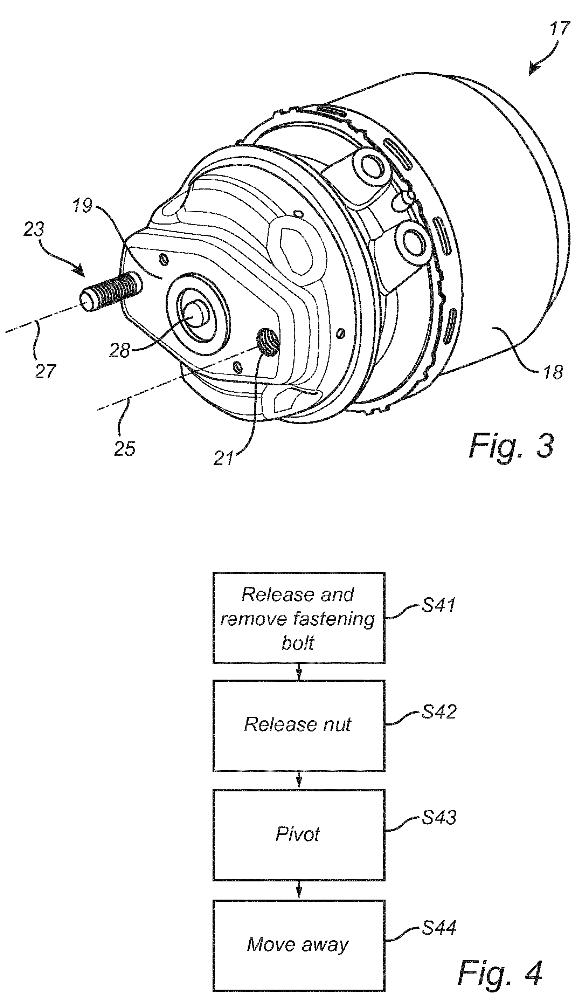

FIG. 3 is an exemplary disc brake actuator 17 according to an example, also illustrated in FIG. 2 as part of the brake assembly 11. The disc brake actuator 17 comprises a mounting surface 19 arranged to abut with a corresponding surface of the brake caliper 13. The disc brake actuator 17 further comprises a housing 18, and in the example of FIG. 3, the mounting surface 19 is formed by a portion of the housing 18. An internally threaded bore 21 extends into the disc brake actuator 17 from the mounting surface 19 along a first direction 25, and an externally threaded bolt 23 is spaced apart from the internally threaded bore 21 and projects from the mounting surface 19 along a second direction 27, parallel to the first direction 25. In this example, the externally threaded bolt 23 is fixed to the housing 18 and is also integrally formed with the housing 18, providing a unitary structure.

**In** the example of FIG. 3, the disc brake actuator 17 comprises an actuator rod 28 for actuating the brake caliper 13. In this example, the internally threaded bore 21 and the externally threaded bolt 23 are positioned substantially equidistant from the actuator rod 28. Furthermore, in this example, the internally threaded bore 21 and the externally threaded bolt 23 are also symmetrically positioned in relation to the actuator rod 28.

**In** the example of FIG. 3, the length of the externally threaded bolt 23 may be greater than the depth of the internally threaded bore 21, and may be at least 20% or at least 30% greater. Restricting the depth of the internally threaded bore 21 while allowing the externally threaded bolt 23 to extend further may be beneficial for achieving a compact disc brake actuator 17, in particular a short disc brake actuator 17, while ensuring sufficient engagement with a fastening bolt.

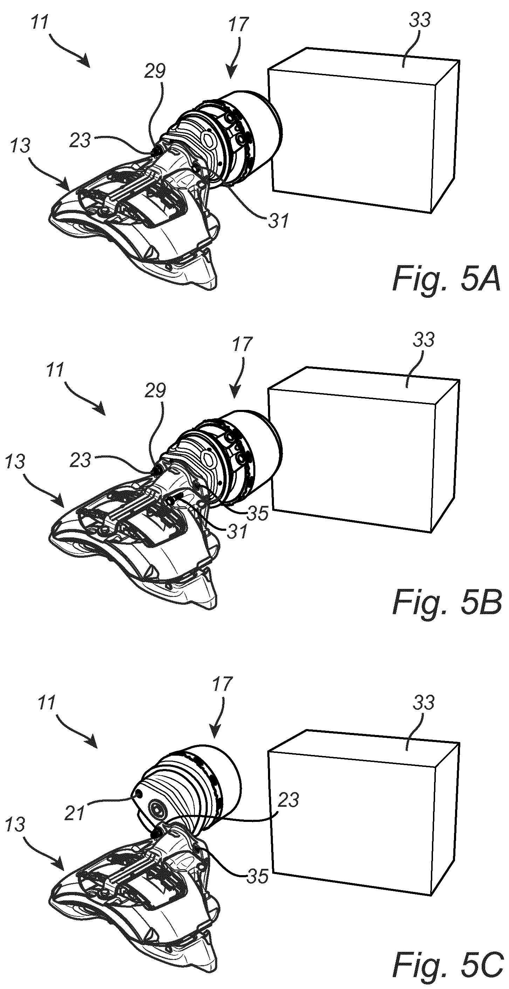

An example method of removing a disc brake actuator from a vehicle will now be described with reference to the flowchart in FIG. 4 and the illustrations in FIGS. 5A-C. FIG. 4 provides a schematic overview of the method actions, while FIGS. 5A-C illustrate the corresponding actions performed on the brake assembly. FIG. 5A shows the state of the brake assembly 11 before removal begins, with the disc brake actuator 17 arranged between the brake caliper 13 and a structural component 33 of the vehicle 1. A distance between the mounting surface of the brake caliper 13 and the structural component 33 is less than the length of the externally threaded bolt 23 of the disc brake actuator 17 (see FIG. 3). The method begins by releasing and removing a fastening bolt 31 engaging with the internally threaded bore 21 of the disc brake actuator 17, thereby disconnecting the fastening bolt 31 from the brake caliper 13.Following this, a nut 29 fastening the externally threaded bolt 23 of the disc brake actuator 17 to the brake caliper 13 is released, leaving the disc brake actuator 17 supported by the externally threaded bolt 23 while still positioned between the brake caliper 13 and the structural component 33, as illustrated in FIG. 5B.

Following this, a nut 29 fastening the externally threaded bolt 23 of the disc brake actuator 17 to the brake caliper 13 is released, leaving the disc brake actuator 17 supported by the externally threaded bolt 23 while still positioned between the brake caliper 13 and the structural component 33, as illustrated in FIG. 5B. Alternatively, the nut 29 can be released before the fastening bolt 31.

The disc brake actuator 17 is then pivoted about the externally threaded bolt 23, moving away from the brake caliper 13 while remaining supported by the externally threaded bolt 23. Following the pivoting motion, the disc brake actuator 17 is repositioned such that the structural component 33 is no longer directly behind it, creating sufficient clearance for its removal, as illustrated in FIG. 5C.

The disc brake actuator 17 is then moved away from the brake caliper 13 until the externally threaded bolt 23 clears the corresponding hole in the brake caliper 13, allowing the disc brake actuator 17 to be removed. This may be done as part of maintenance, for example, when replacing a faulty disc brake actuator or performing service on the brake assembly 11.

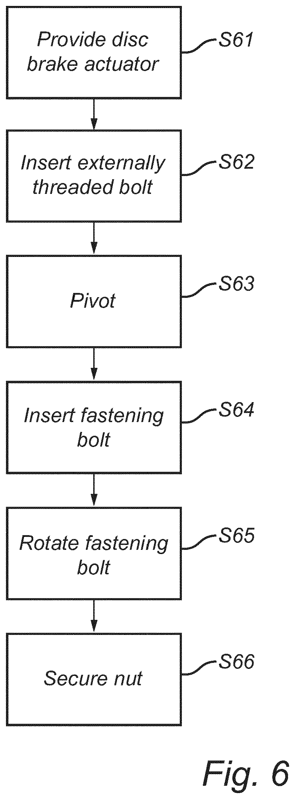

An example method of installing a disc brake actuator in a vehicle will now be described with reference to the flowchart in FIG. 6 and the illustrations in FIGS. 5A-C. FIG. 6 provides a schematic overview of the method actions, while FIGS. 5A-C illustrate the corresponding actions performed on the brake assembly, in reverse order compared to the removal method. The method begins with providing S61 a disc brake actuator 17 having a mounting surface 19 arranged to abut with a corresponding surface of a brake caliper 13, the disc brake actuator 17 including an internally threaded bore 21 extending into the disc brake actuator 17 from the mounting surface 19 along a first direction 25, and an externally threaded bolt 23 spaced apart from the internally threaded bore 21 and projecting from the mounting surface 19 along a second direction 27, parallel to the first direction 25.

The method continues with inserting S62 the externally threaded bolt 23 through a corresponding first hole in the brake caliper 13, with the disc brake actuator 17 remaining supported by the externally threaded bolt 23 while positioned away from the brake caliper 13. This situation is illustrated in FIG. 5C.

The method continues with pivoting S63 the disc brake actuator 17 about the externally threaded bolt 23 until the internally threaded bore 21 is aligned with a corresponding second hole 35 in the brake caliper 13. This situation is illustrated in FIG. 5B.

The method continues with inserting S64 a fastening bolt 31 through the corresponding second hole 35 and into the internally threaded bore 21, rotating S65 the fastening bolt 31 to engage the internally threaded bore 21, and securing S66 a nut 29 onto the externally threaded bolt 23 of the disc brake actuator 17. The order of securing the fastening bolt 31 and the nut 29 can be reversed. This situation is illustrated in FIG. 5A. The disc brake actuator 17 is now installed.

Example 1: A disc brake actuator 17 for a heavy-duty vehicle 1, the disc brake actuator 17 comprising a mounting surface 19 arranged to abut with a corresponding surface of a brake caliper 13 of the vehicle 1, an internally threaded bore 21 extending into the disc brake actuator 17 from the mounting surface 19 along a first direction 25, and an externally threaded bolt 23 spaced apart from the internally threaded bore 21 and projecting from the mounting surface 19 along a second direction 27, parallel to the first direction 25.

Example 2: The disc brake actuator 17 of Example 1, wherein the disc brake actuator 1 comprises a housing 18, and the mounting surface 19 is formed by a portion of the housing 18.

Example 3: The disc brake actuator 17 of Example 2, wherein the externally threaded bolt 23 is fixed to the housing 18 of the disc brake actuator 17.

Example 4: The disc brake actuator 17 of Example 3, wherein the externally threaded bolt 23 is integrally formed with the housing 18 of the disc brake actuator 17.

Example 5: The disc brake actuator 17 of any of Examples 1-4, wherein a length of the externally threaded bolt 23 from the mounting surface 19 of the disc brake actuator 17 is greater than a depth of the internally threaded bore 21 from the mounting surface 19 of the disc brake actuator 17.

Example 6: The disc brake actuator 17 of Example 5, wherein the length of the externally threaded bolt 23 is at least 20% greater than the depth of the internally threaded bore 21.

Example 7: The disc brake actuator 17 of Example 6, wherein the length of the externally threaded bolt 23 is at least 30% greater than the depth of the internally threaded bore 21.

Example 8: The disc brake actuator 17 of any of Examples 1-7, wherein the disc brake actuator 17 comprises an actuator rod 28 for actuating the brake caliper 13 of the vehicle 1, and the internally threaded bore 21 and the externally threaded bolt 23 are substantially equidistant from the actuator rod 28.

Example 9: The disc brake actuator 17 of Example 8, wherein the internally threaded bore 21 and the externally threaded bolt 23 are symmetrically positioned in relation to the actuator rod 28.

Example 10: A kit of parts comprising the disc brake actuator 17 of any of Examples 1-9, a fastening bolt 31 configured to be received by and engage with the internally threaded bore 21 of the disc brake actuator 17, and a nut 29 configured to engage with the externally threaded bolt 23 of the disc brake actuator 17.

Example 11: A brake assembly 11 comprising a brake caliper 13, and the disc brake actuator 17 of any of Examples 1-9, attached to the brake caliper 13 in such a way that the mounting surface 19 of the disc brake actuator 17 interfaces with a corresponding mounting surface of the brake caliper 13.

Example 12: The brake assembly 11 of Example 11, wherein the externally threaded bolt 23 of the disc brake actuator 17 extends through a corresponding hole in the brake caliper 13 and is secured by a nut 29, and wherein a fastening bolt 31 is received in the internally threaded bore 21 to fasten the disc brake actuator 17 to the brake caliper 13.

Example 13: The brake assembly 11 of Example 12, wherein the externally threaded bolt 23 of the disc brake actuator 17 defines a pivot axis about which the disc brake actuator 17 can be pivoted when the nut 29 has been released and the fastening bolt 31 received in the internally threaded bore 21 has been removed.

Example 14: A vehicle 1 comprising at least one brake assembly 11 of any of Examples 11-13.

Example 15: The vehicle 1 of Example 14, comprising a plurality of wheels 7, and one brake assembly 11 of any of Examples 11-13 for each wheel 7 of the plurality of wheels.

Example 16: The vehicle 1 of Example 14 or 15, wherein the disc brake actuator 17 is arranged between the brake caliper 13 and a structural component 33 of the vehicle 1, and a distance between the mounting surface of the brake caliper 13 and the structural component 33 of the vehicle 1 is less than a length of the externally threaded bolt 23 of the disc brake actuator 17.

Example 17: The vehicle 1 of Example 16, wherein the distance between the mounting surface of the brake caliper 13 and the structural component 33 of the vehicle 1 is a distance in the first direction 25.

Example 18: A method of removing from a vehicle 1 a disc brake actuator 17 having a mounting surface 19 arranged in abutment with a corresponding surface of a brake caliper 13 of the vehicle 1, the disc brake actuator 17 including an internally threaded bore 21 extending into the disc brake actuator 17 from the mounting surface 19 along a first direction 25, and an externally threaded bolt 23 spaced apart from the internally threaded bore 21 and projecting from the mounting surface 19 along a second direction 27, parallel to the first direction 25, the method comprising releasing S41 and removing a fastening bolt 31 engaging with the internally threaded bore 21 of the brake actuator 17, releasing S42 a nut 29 fastening the externally threaded bolt 25 of the disc brake actuator 17 to the brake caliper 13 of the vehicle 1, pivoting S43 the disc brake actuator 17 about the externally threaded bolt 23, and moving S44 the disc brake actuator 17 away from the brake caliper 13 until the externally threaded bolt 23 goes free from the corresponding hole of the brake caliper 13.

Example 19: The method according to Example 18, wherein the vehicle 1 comprises a structural component 33 partly blocking removal of the disc brake actuator 17 without first pivoting the disc brake actuator 17 about the externally threaded bolt 23 of the disc brake actuator 17, and the disc brake actuator 17 is pivoted about the externally threaded bolt 23 until the disc brake actuator 17 can be removed without interference from the structural component 33 of the vehicle 1.

Example 20: A method of installing a disc brake actuator 17 in a vehicle 1, the method comprising providing S61 a disc brake actuator 17 having a mounting surface 19 arranged to abut with a corresponding surface of a brake caliper 13 of the vehicle 1, the disc brake actuator 17 including an internally threaded bore 21 extending into the disc brake actuator 17 from the mounting surface 19 along a first direction 25, and an externally threaded bolt 23 spaced apart from the internally threaded bore 21 and projecting from the mounting surface 19 along a second direction 27, parallel to the first direction 25, inserting S62 the externally threaded bolt 23 through a corresponding first hole in the brake caliper 13 of the vehicle 1, pivoting S63 the disc brake actuator 17 about the externally threaded bolt 23 until the internally threaded bore 21 is aligned with a corresponding second hole 35 in the brake caliper 13, inserting S64 a fastening bolt 31 through the corresponding second hole 35 and into the internally threaded bore 21, rotating S65 the fastening bolt 31 to engage the internally threaded bore 21, and securing S66 a nut 29 onto the externally threaded bolt 23 of the disc brake actuator 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. **In** contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A disc brake actuator (17) for a heavy-duty vehicle (1), the disc brake actuator (17) comprising:
a mounting surface (19) arranged to abut with a corresponding surface of a brake caliper (13) of the vehicle (1);
an internally threaded bore (21) extending into the disc brake actuator (17) from the mounting surface (19) along a first direction (25); and
an externally threaded bolt (23) spaced apart from the internally threaded bore (21) and projecting from the mounting surface (19) along a second direction (27), parallel to the first direction (25).

2. The disc brake actuator (17) of claim 1, wherein a length of the externally threaded bolt (23), from the mounting surface (19) of the disc brake actuator (17), is greater than a depth of the internally threaded bore (21), from the mounting surface (19) of the disc brake actuator (17).

3. The disc brake actuator (17) of any of the preceding claims, wherein:
the disc brake actuator (17) comprises an actuator rod (28) for actuating the brake caliper (13) of the vehicle (1); and
the internally threaded bore (21) and the externally threaded bolt (23) are substantially equidistant from the actuator rod (28).

4. The disc brake actuator (17) of claim 3, wherein the internally threaded bore (21) and the externally threaded bolt (23) are symmetrically positioned in relation to the actuator rod (28).

5. A kit of parts comprising:
the disc brake actuator (17) of any of claims 1-4;
a fastening bolt (31) configured to be received by and engage with the internally threaded bore (21) of the disc brake actuator (17); and
a nut (29) configured to engage with the externally threaded bolt (23) of the disc brake actuator (17).

6. A brake assembly (11) comprising:
a brake caliper (13); and
the disc brake actuator (17) of any of claims 1-4, attached to the brake caliper (13) in such a way that the mounting surface (19) of the disc brake actuator (17) interfaces with a corresponding mounting surface of the brake caliper (13).

7. The brake assembly (11) of claim 6, wherein the externally threaded bolt (23) of the disc brake actuator (17) extends through a corresponding hole in the brake caliper (13) and is secured by a nut (29), and wherein a fastening bolt (31) is received in the internally threaded bore (21) to fasten the disc brake actuator (17) to the brake caliper (13).

8. The brake assembly (11) of claim 7, wherein the externally threaded bolt (23) of the disc brake actuator (17) defines a pivot axis about which the disc brake actuator (17) can be pivoted when the nut (29) has been released and the fastening bolt (31) received in the internally threaded bore (21) has been removed.

9. A vehicle (1) comprising at least one brake assembly (11) of any of claims 6-8.

10. The vehicle (1) of claim 9, comprising a plurality of wheels (7), and one brake assembly (11) of any of claims 6-8 for each wheel (7) of the plurality of wheels.

11. The vehicle (1) of claim 9 or 10, wherein:
the disc brake actuator (17) is arranged between the brake caliper (13) and a structural component (33) of the vehicle (1); and
a distance between the mounting surface of the brake caliper (13) and the structural component (33) of the vehicle (1) is less than a length of the externally threaded bolt (23) of the disc brake actuator (17).

12. The vehicle (1) of claim 11, wherein the distance between the mounting surface of the brake caliper (13) and the structural component (33) of the vehicle (1) is a distance in the first direction (25).

13. A method of removing from a vehicle (1) a disc brake actuator (17) having a mounting surface (19) arranged in abutment with a corresponding surface of a brake caliper (13) of the vehicle (1), the disc brake actuator (17) including an internally threaded bore (21) extending into the disc brake actuator (17) from the mounting surface (19) along a first direction (25), and an externally threaded bolt (23) spaced apart from the internally threaded bore (21) and projecting from the mounting surface (19) along a second direction (27), parallel to the first direction (25), the method comprising:
releasing (S41) and removing a fastening bolt (31) engaging with the internally threaded bore (21) of the brake actuator (17);
releasing (S42) a nut (29) fastening the externally threaded bolt (25) of the disc brake actuator (17) to the brake caliper (13) of the vehicle (1);
pivoting (S43) the disc brake actuator (17) about the externally threaded bolt (23); and
moving (S44) the disc brake actuator (17) away from the brake caliper (13) until the externally threaded bolt (23) goes free from the corresponding hole of the brake caliper (13).

14. The method according to claim 13, wherein:
the vehicle (1) comprises a structural component (33) partly blocking removal of the disc brake actuator (17) without first pivoting the disc brake actuator (17) about the externally threaded bolt (23) of the disc brake actuator (17); and
the disc brake actuator (17) is pivoted about the externally threaded bolt (23) until the disc brake actuator (17) can be removed without interference from the structural component (33) of the vehicle (1).

15. A method of installing a disc brake actuator (17) in a vehicle (1), the method comprising:
providing (S61) a disc brake actuator (17) having a mounting surface (19) arranged to abut with a corresponding surface of a brake caliper (13) of the vehicle (1), the disc brake actuator (17) including an internally threaded bore (21) extending into the disc brake actuator (17) from the mounting surface (19) along a first direction (25), and an externally threaded bolt (23) spaced apart from the internally threaded bore (21) and projecting from the mounting surface (19) along a second direction (27), parallel to the first direction (25);
inserting (S62) the externally threaded bolt (23) through a corresponding first hole in the brake caliper (13) of the vehicle (1);
pivoting (S63) the disc brake actuator (17) about the externally threaded bolt (23) until the internally threaded bore (21) is aligned with a corresponding second hole (35) in the brake caliper (13);
inserting (S64) a fastening bolt (31) through the corresponding second hole (35) and into the internally threaded bore (21);
rotating (S65) the fastening bolt (31) to engage the internally threaded bore (21); and
securing (S66) a nut (29) onto the externally threaded bolt (23) of the disc brake actuator (17).
